Europäisches Patentamt

European Patent Office

Office européen des brevets

(19)

(11) Publication number: 0 296 887
A2

## (12) EUROPEAN PATENT APPLICATION

(21) Application number: 88305836.4

(22) Date of filing: 24.06.88

(51) Int. Cl.⁴: G 02 B 6/12

(30) Priority: 26.06.87 GB 8715002
16.05.88 GB 8811519

(43) Date of publication of application:
28.12.88 Bulletin 88/52

(84) Designated Contracting States:
AT BE CH DE ES FR GR IT LI LU NL SE

(71) Applicant: THE MARCONI COMPANY LIMITED
The Grove Warren Lane
Stanmore Middlesex HA7 4LY (GB)

(72) Inventor: Greed, Robert Brian
7 Coriander Road Heathview Estates
Tiptree Essex C05 0AS (GB)

Clements, Kenneth Harold George
4 Vicarage Crescent Hatfield Peverel
Essex CM3 2HY (GB)

(74) Representative: Waters, Jeffrey
The General Electric Company plc Central Patent
Department Marconi Research Centre West Hanningfield
Road
Great Baddow Chelmsford Essex CM2 8HN (GB)

(54) A waveguide.

(57) In an integrated circuit based on E-plane technology H-plane components are included. At each port of each H-plane component a slot is machined transverse to the general direction of the waveguide. Inserts are located in the slots to form sections of waveguide at angles to the E and H-plane waveguide portions. The inserts thus define suitable transitions between E and H-plane parts of the system.

FIG. I.

EP 0 296 887 A2

Bundesdruckerei Berlin

## Description

## A Waveguide

This invention relates to a waveguide and more particularly to a so-called split-block waveguide construction: i.e. a waveguide of the type formed from two parts, each having a channel and means for connecting the parts together so that the two channels co-operate to form a rectangular waveguide.

Waveguides formed in this way are most efficient if the "split" between the two parts is mid-way along the broad dimension of the rectangular cross-section of the waveguide. This is because, at this position, the radio frequency current is zero or near zero and thus the split has little effect on the performance of the waveguide. This technique is known generally as "E-plane technology" because the split is in the plane of the electric or E field of the dominant waveguide mode.

E-plane technology is employed in integrated systems comprising a number of components joined by waveguides or other suitable interfacing transmission lines. For some of these components it may be preferable to utilise an orientation other than the E-plane. For example the H-plane circulator is well known to have improved performance over its E-plane counterpart. For this reason it has previously been necessary to provide H-plane components as separate bolt-on additions to an otherwise integrated system. This invention arose in an endeavour to include such H-plane components as part of the integrated system rather than as a bolt-on addition.

This invention provides a waveguide formed from two parts, each having a channel and means for connecting parts together so that the two channels co-operate to form a waveguide, a first portion of the waveguide being rectangular and arranged so that the E-plane is parallel to a join between the two parts and a second portion being also rectangular and arranged so that the H-plane is parallel to the join; each of the said parts having a recess located between the first and second waveguide portions, and the two recesses receiving one or more inserts defining a transition between the first and second portions.

It will be appreciated that by employing the invention it is possible to include H-plane components within an integrated circuit based on E-plane technology, simply by including a suitable recess and insert at each inlet and outlet port of each H-plane component.

At the H-plane parts or components it is desirable to take special measures to ensure that there is a good conduction path between the two halves of the split block. Such measures can include specially accurate machining of the abutting faces and for the rebating of the blocks at all areas other than adjacent the waveguides so as to leave raised lips there to provide increased pressure and therefore a good contact when the two halves are bolted together.

It would be possible for the "transition" defined by the insert or inserts to be in the form of a section of twisted waveguide, but that would be difficult to implement in practice because it would involve a complex process of machining the necessary twisted shape. It is therefore preferred that the insert or inserts define a short third section of rectangular waveguide arranged at acute angles to the first and second portions.

One way of performing the invention will now be described by way of example with reference to the accompanying drawings in which:-

Fig. 1 is a perspective view of one half of an integrated circuit employing features in accordance with the invention; and

Fig. 2 shows, on a larger scale, details of an E-plane to H-plane transition also shown in less detail on figure 1.

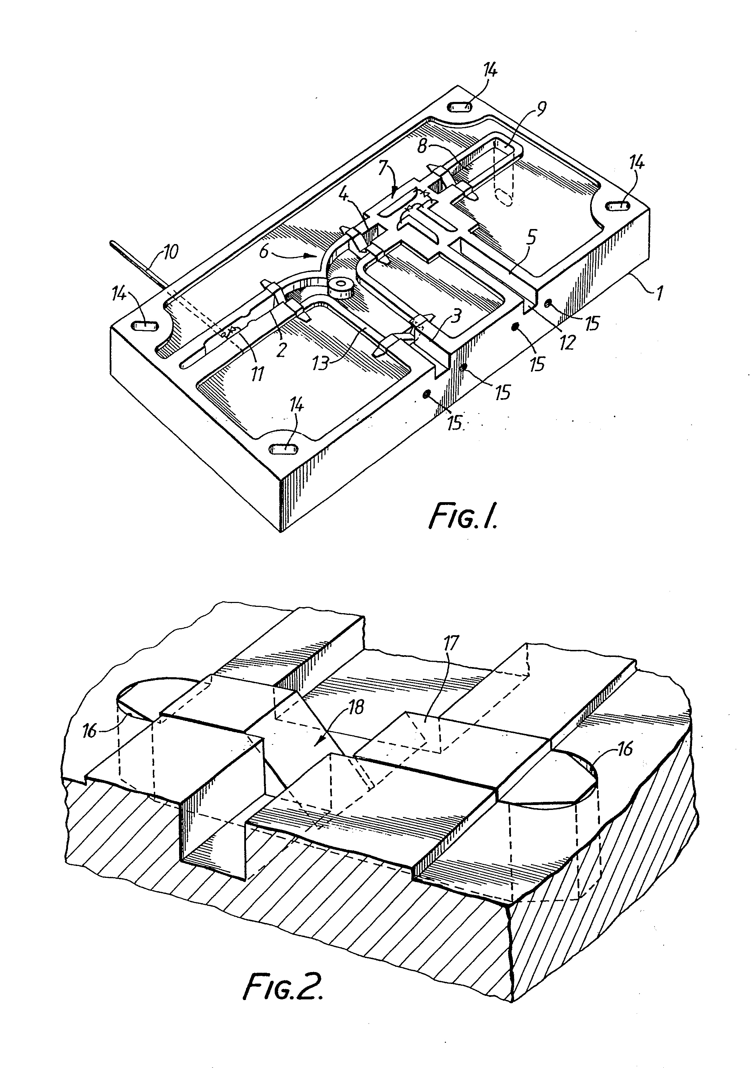

Referring to figure 1 there is shown one half only of an integrated circuit. The illustrated half comprises a block of electrically conductive metal which is machined as shown so that when the two blocks are connected together they form E-plane waveguides 2,3,4 and 5 and H-plane components 6 and 9 in the form of a circulator and an output transition respectively. It will be appreciated that the two halves of the circuit exactly compliment each other. At each E to H-plane transition there is machined a recess 16 (Fig. 2) which receives a conductive insert 17. The insert 17 has a slot 18 machined in it and this co-operates with the corresponding slot of a similar insert contained in the other half of the circuit to form a short section of waveguide arranged at 45⁰ to the waveguides on either side of it. This allows transmission of energy between the latter. It would in an alternative embodiment be possible to use a series of inserts in the same slot arranged at progressively different angles.

Reverting now to figure 1, DC power is supplied along the co-axial line 10 to an oscillator which generates microwave energy. This is propagated along the E-plane waveguide 2 to the H-plane circulator 6: at each port of which is a transition like that shown in figure 2. The energy is then passed to waveguides 4 and 5 fitted with a fin-line component 7. This is designed as a switch which passes energy along waveguide 5 to an outlet port 12 or, via an E to H-plane transition 17 to an H-plane waveguide 8. The latter has a right-angle E-plane bend at 9 and passes through the thickness of the block 1 to the bottom side as viewed on figure 1.

Holes 14 receive bolts (not shown) to hold the two blocks together and the blocks are recessed to provide pressure lips, such as shown at 13 to provide improved electrical contact. Further threaded holes 15 are provid to effect connection of the integrated circuit to separate waveguides or other components.

## Claims

1. A waveguide formed from two parts, each having a channel and means for connecting the parts together so that the two channels co-operate to form a waveguide, the first portion of the waveguide being rectangular and arranged so that the E-plane is parallel to a join between the two parts and a second portion being also rectangular and arranged so that the H-plane is parallel to the join; each of the said parts having a recess located between the first and second waveguide portions, and the two recesses receiving one or more inserts defining a transition between the first and second portions.

2. A waveguide according to claim 1 in which the transition takes the form of a third portion of rectangular waveguide arranged at acute angles to the first and second portions.

3. An integrated circuit based on E-plane technology and including H-plane components linked to other components by waveguides constructed in accordance with claim 1 or 2.

0296887

FIG.1.

FIG.2.